# EUROPÄISCHE PATENTSCHRIFT

(11) **EP 2 720 353 B1**
(45) Veröffentlichungstag und Bekanntmachung des Hinweises auf die Patenterteilung: **30.10.2019**
(21) Anmeldenummer: 13183637.1
(22) Anmeldetag: 10.09.2013
(51) Int. Cl.: H02K 13/10

(54) **Kommutierungseinrichtung zur Stromübertragung in einer elektrischen Maschine**
Commutation device for power transmission in an electric machine
Dispositif de commutation pour la transmission de courant dans une machine électrique

(30) Priorität: 15.10.2012 DE 102012218708
(43) Veröffentlichungstag der Anmeldung: 16.04.2014
(73) Patentinhaber: SEG Automotive Germany GmbH, 70499 Stuttgart (DE)
(72) Erfinder: Heinau, Christian, 96047 Bamberg (DE); Weller, Nico, 75056 Sulzfeld (DE); Bayer, Michael, 85055 Ingoldstadt (DE); Pirsch, Roman, 73257 Koengen (DE); Ramsayer, Reiner, 71277 Rutesheim (DE); Siems, Hans-Dieter, 71735 Eberdingen (DE); Hartmann, Sven, 70439 Stuttgart (DE); Winkler, Jens, 30900 Wedemark (DE); Henrichs, Volker, 71638 Ludwigsburg (DE)
(74) Vertreter: Steinbauer, Florian

(56) Entgegenhaltungen:
- EP-A1- 2 366 889
- CN-A- 102 684 025
- JP-A- 2001 258 213
- US-A- 3 450 914
- US-A- 4 933 587

## Beschreibung

Die Erfindung bezieht sich auf eine Kommutierungseinrichtung zur Stromübertragung in einer elektrischen Maschine nach dem Oberbegriff des Anspruches 1.

### Stand der Technik

In der WO 02/16763 A1 wird ein elektrischer Startermotor beschrieben, der in einer Startvorrichtung zum Starten einer Brennkraftmaschine eingesetzt wird und als Gleichstrommotor mit Permanenterregung ausgeführt ist. Der Startermotor ist mit einer Kommutierungseinrichtung zur Stromübertragung und -wendung auf den im Starter rotierend gelagerten Anker versehen. Die Kommutierungseinrichtung umfasst einen ankerseitigen Kommutatorläufer bzw. Kollektor und mehrere, an dem Kollektor anliegende Kohlebürsten, die jeweils von einer Bürstenfeder radial auf die Mantelfläche des Kollektors kraftbeaufschlagt sind.

Der Kollektor weist über den Umfang verteilt mehrere Lamellen auf, die in Kontakt mit den Bürsten stehen und den Strom auf Ankerwicklungen weiterleiten. Die Lamellen bestehen üblicherweise aus Kupfer.

Kommutierungseinrichtungen sind auch aus der EP 2 366 889 A1 und der US 3 450 914 A bekannt.

In der US 4 933 587 A wird ein Kommutator mit Lamellen mit Kupferabschnitt und Aluminiumabschnitt offenbart, bei dem die Kupferabschnitte zum Kontakt mit den Bürsten auf der radialen Außenseite der Lamellen vorgesehen sind. Auf dem Kupferabschnitt ist Aluminiumabschnitt aufgebracht an dem eine Ankerwicklung kontaktiert ist.

In der CN 102 684 025 und der JP 2001-258213 werden jeweils Lamellen für einen Kommutator offenbart, bei dem ein Aluminiumbereich in umfänglicher Richtung von einem Kupfermantel umgeben ist, wobei auf dem Kupfermantel an einer radial außenliegenden Seite die Bürsten anliegen.

### Offenbarung der Erfindung

Der Erfindung liegt die Aufgabe zugrunde, eine Kommutierungseinrichtung in einer elektrischen Maschine mit einfachen Maßnahmen bei reduziertem Gewicht betriebssicher auszuführen.

Diese Aufgabe wird erfindungsgemäß mit den Merkmalen des Anspruches 1 gelöst. Die Unteransprüche geben zweckmäßige Weiterbildungen an.

Die erfindungsgemäße Kommutierungseinrichtung wird zur Stromübertragung und -wendung in elektrischen Maschinen eingesetzt, beispielsweise bei elektrischen Startermotoren von Starteinrichtungen für Brennkraftmaschinen. Es kommt sowohl eine Verwendung in Gleichstrommotoren mit Permanenterregung als auch mit elektrischer Erregung in Betracht. Die elektrischen Maschinen mit der Kommutierungseinrichtung sind insbesondere als Innenläufer-Elektromotoren ausgeführt.

Die Kommutierungseinrichtung weist einen ankerseitigen Kommutatorläufer bzw. Kollektor auf, der mit der Rotorwelle der elektrischen Maschine verbunden ist und über den Rotor- bzw. Ankerspulen im Anker der Rotorwelle bestromt werden. Bei einer Ausführung der elektrischen Maschine als Gleichstrommotor mit Permanenterregung sind an der Innenwand des Stators Permanentmagnete angeordnet, deren Magnetfeld mit dem elektromagnetischen Wechselfeld der elektrischen Spulen im Anker auf der Motorwelle interagiert.

Der Kollektor weist über den Umfang eine Mehrzahl einzelner Lamellen auf, die jeweils elektrisch mit einer Ankerspule verbunden sind und an denen die federkraftbeaufschlagten Bürsten anliegen. Bei der erfindungsgemäßen Kommutierungseinrichtung sind die Lamellen des Kollektors aus zwei verschiedenen Materialpaarungen aufgebaut und weisen jeweils zum einen einen Aluminium- oder Zinkabschnitt und zum andern einen Kupfer- oder Messingabschnitt auf. Der Kupfer- bzw. Messingabschnitt befindet sich auf der außenliegenden Seite der Lauffläche am Kollektor und dient zur Kontaktierung mit den Bürsten. Der Aluminium- bzw. Zinkabschnitt ist mit dem Kupfer- bzw. Messingabschnitt elektrisch verbunden und steht außerdem elektrisch mit einer Ankerwicklung in Kontakt. Somit dient der Aluminium- bzw. Zinkabschnitt als elektrischer Leiter zwischen dem Kupfer- bzw. Messingabschnitt und den Ankerwicklungen.

Diese Ausführung hat den Vorteil, dass die Kommutatorlamellen im Bereich der Laufbahn der Bürsten aus Kupfer bzw. Messing bestehen, so dass insoweit ein bewährter Kontakt zwischen den Bürsten und den Lamellen gegeben ist. Der Aluminium- oder Zinkabschnitt hat dagegen den Vorteil, dass es sich um ein spezifisch leichteres Material als Kupfer oder Messing handelt, wodurch die Masse und das Trägheitsmoment des Kollektors reduziert sind, was mit einer Verringerung von Fliehkräften bzw. einer Erhöhung der Beschleunigung einhergeht.

Der Aluminium- bzw. Zinkabschnitt kann entweder vollständig aus Aluminium bzw. Zink bestehen oder einen Anteil an Aluminium bzw. Zink aufweisen. In entsprechender Weise kann der Kupfer- bzw. Messingabschnitt entweder vollständig aus Kupfer bzw. Messing bestehen oder einen Kupfer- bzw. Messinganteil aufweisen. Der Anteil des jeweiligen Materials Aluminium bzw. Zink oder Kupfer bzw. Messing beträgt vorteilhafterweise mindestens 50 %.

Vorteilhafterweise erfolgt der Schleifkontakt zwischen den Bürsten und dem Kollektor an der radial außenliegenden Seite der Lamellen; der Kupfer- bzw. Messingabschnitt bildet die radial außenliegende Lauffläche, wohingegen der Aluminium- bzw. Zinkabschnitt radial innenliegt. Möglich ist aber auch eine Ausführung als Axialkommutator, bei der der Kupfer- bzw. Messingabschnitt an der axialen Stirnseite liegt und von der Bürste beaufschlagt wird, wohingegen der Aluminium- bzw. Zinkabschnitt zur Stirnseite axial beabstandet ist.

Der Aluminium- bzw. Zinkabschnitt ist Bestandteil der Lamelle und fest mit dem Kollektor verbunden. Gemäß einer vorteilhaften Ausführung ist vorgesehen, dass der Aluminium- bzw. Zinkabschnitt Träger des Kupfer- bzw. Messingabschnittes ist, insbesondere dergestalt, dass der Aluminium- bzw. Zinkabschnitt einen auf der Lauffläche radial innenliegenden Aluminium- bzw. Zinkkern bildet, der an der radial außenliegenden Seite der Lauffläche den Kupfer- bzw. Messingabschnitt aufweist. In dieser Ausführung verbindet der Aluminium- bzw. Zinkkern den Kupfer- bzw. Messingabschnitt mit dem Kollektor.

Erfindungsgemäß ist es vorgesehen, dass der Aluminium- bzw. Zinkabschnitt an der axialen Stirnseite des Kupfer- bzw. Messingabschnittes angeordnet ist. Dabei ist zweckmäßigerweise der Kupfer- bzw. Messingabschnitt unmittelbar mit dem Kollektor verbunden, der Aluminium bzw. Zinkabschnitt ist ebenfalls mit dem Kollektor verbunden. Der Aluminium- bzw. Zinkabschnitt kann beispielsweise als ein die auf der Lauffläche
außenliegende Mantelfläche des Kupfer- bzw. Messingabschnitts radial überragendes Segment ausgebildet sein, das mit Anschlussfahnen der Ankerwicklung verbunden ist.

Die Verbindung zwischen dem Aluminium- bzw. Zinkabschnitt und dem Kupfer- bzw. Messingabschnitt kann auf verschiedene Weisen durchgeführt werden. Gemäß bevorzugter Ausführung sind die Abschnitte formschlüssig und/oder stoffschlüssig miteinander verbunden. Bei einer formschlüssigen Verbindung sind die Abschnitte beispielsweise miteinander verstemmt, bei einer stoffschlüssigen Verbindung können die Abschnitte beispielsweise mittels Reibschweißens verbunden werden.

Zur Herstellung der Lamellen kommen verschiedene Vorgehensweisen in Betracht. Zum Beispiel kann der Kupfer- bzw. Messingabschnitt im Ausgangszustand als Rohr vorliegen, an das eine scheibenförmige Platte aus Aluminium bzw. Zink stirnseitig befestigt wird, woraufhin zur Herstellung der Kommutatorlamellen eine Vereinzelung erfolgt, bei der einzelne Segmente durch radiales Auftrennen des Rohrs erzeugt werden.

Gemäß einer weiteren Ausführung ist vorgesehen, dass Einzelbleche aus Kupfer bzw. Messing und Aluminium bzw. Zink miteinander verbunden werden, insbesondere stirnseitig. Des Weiteren ist auch eine Verbindung eines Kupfer- bzw. Messingblechs mit einem Aluminium- bzw. Zinkblech durch Walzplattieren möglich. Hierbei werden die Bleche insbesondere in Radialrichtung aufeinanderliegend miteinander verbunden. Schließlich kommt auch ein Ineinanderschieben von jeweils rohrförmigen Abschnitten aus Aluminium bzw. Zink und Kupfer bzw. Messing in Betracht; hierbei wird ein Kupfer- bzw. Messingrohr auf ein Aluminium- bzw. Zinkrohr kleineren Durchmessers aufgeschoben und verbunden, anschließend erfolgt die Vereinzelung. Die Verbindung erfolgt beispielsweise durch Electromagnetic Pulse Welding, Reibschweißen oder Walzplattieren incl. Diffusion.

Insbesondere in der Ausführung, in der der Aluminium- bzw. Zinkabschnitt einen tragenden Kern für den Kupfer- bzw. Messingabschnitt bildet, kann es zweckmäßig sein, den Aluminium- bzw. Zinkkern im Bereich einer Stirnseite radial aufzubiegen, um eine Kommutatorfahne zu erhalten, über die die elektrische Verbindung zur Ankerwicklung erfolgt.

Es kann des Weiteren zweckmäßig sein, den Kupfer- bzw. Messingabschnitt als eine Schicht auszuführen, die auf den Aluminium- bzw. Zinkabschnitt aufgebracht ist. Dementsprechend weist die Kupfer- bzw. Messingschicht nur eine verhältnismäßig geringe radiale Dicke auf.

Gemäß einer weiteren zweckmäßigen Ausführung ist zumindest ein Abschnitt der Lamelle in einem elektrisch isolierenden Kollektorgrundkörper des Kollektors aufgenommen. Der Kollektorgrundkörper ist beispielsweise als eine Kunststoffpressmasse ausgebildet, welche den Abschnitt der Lamelle aufnimmt, wobei vorteilhafterweise die Trennstelle zwischen dem Aluminium- bzw. Zinkabschnitt und dem Kupfer- bzw. Messingabschnitt radial vom Kollektorgrundkörper übergriffen wird. Es kann zweckmäßig sein, eine oder mehrere Seitenflächen der Lamellen, insbesondere benachbart zum Übergang zwischen dem Aluminium- bzw. Zinkabschnitt und dem Kupfer- bzw. Messingabschnitt, mit einer Oberflächenstrukturierung zu versehen, in die sich die Pressmasse verkrallen kann, wodurch eine bessere Haftung und Verbindung zur Pressmasse erreicht wird. Außerdem stellt die Oberflächenstrukturierung eine Kriechbarriere gegen Nässe dar, wodurch ein Korrosionsschutz erzielt wird. Gegebenenfalls können in die Seitenflächen der Lamellenabschnitte auch überstehende Kanten bzw. Nuten oder Ausnehmungen eingebracht werden, um die Verbindung zur Pressmasse zu verbessern und zusätzliche Kriechbarrieren zu erzeugen.

Der radiale Überstand, mit dem der Kollektorgrundkörper die Trennstelle zwischen dem Aluminium- bzw. Zinkabschnitt und dem Kupfer- bzw. Messingabschnitt radial übergreift, beträgt vorteilhafterweise zumindest 1 % des Kollektordurchmessers. Des Weiteren ist es vorteilhaft, dass der radiale Überstand maximal zwei Drittel der Radialdicke des Kupfer- bzw. Messingabschnittes beträgt, so dass der Kupfer- bzw. Messingabschnitt in ausreichender Weise radial freiliegt für den Oberflächenkontakt mit den Bürsten.

Weitere Vorteile und zweckmäßige Ausführungen sind den weiteren Ansprüchen, der Figurenbeschreibung und den Zeichnungen zu entnehmen. Es zeigen:
- Fig. 1: eine Startvorrichtung für eine Brennkraftmaschine im Längsschnitt,
- Fig. 2: der Kollektor der Kommutierungseinrichtung des elektrischen Startermotors der Startvorrichtung im Längsschnitt durch eine Lamelle, die radial innenliegend einen Aluminiumabschnitt und radial außenliegend einen Kupferabschnitt aufweist,
- Fig. 3 bis 5: verschiedene Ausführungsvarianten von Lamellen mit innenliegendem Aluminiumabschnitt und außenliegendem Kupferabschnitt,
- Fig. 6: einen Längsschnitt durch ein Kupferrohr und eine Aluminiumscheibe, welche stirnseitig an das Kupferrohr angeschweißt wird, wobei Kupferrohr und Aluminiumscheibe anschließend zu Lamellen vereinzelt werden,
- Fig. 7: einen Längsschnitt durch einen Kollektor, dessen Lamellen gemäß Fig. 6 aufgebaut sind,
- Fig. 8: einen Schnitt quer zur Kollektorlängsachse, mit einer Lamelle, deren Seitenwände Nuten für eine verbesserte Aufnahme in einer Kunststoffpressmasse des Kollektors aufweisen,
- Fig. 9: in perspektivischer Einzeldarstellung eine Lamelle mit einer seitlichen Oberflächenstrukturierung für eine verbesserte Verbindung zur Kollektorpressmasse,
- Fig. 10: einen Schnitt längs durch einen Kollektor mit einer Lamelle in einer weiteren Ausführung.

In den Figuren sind gleiche Bauteile mit gleichen Bezugszeichen versehen.

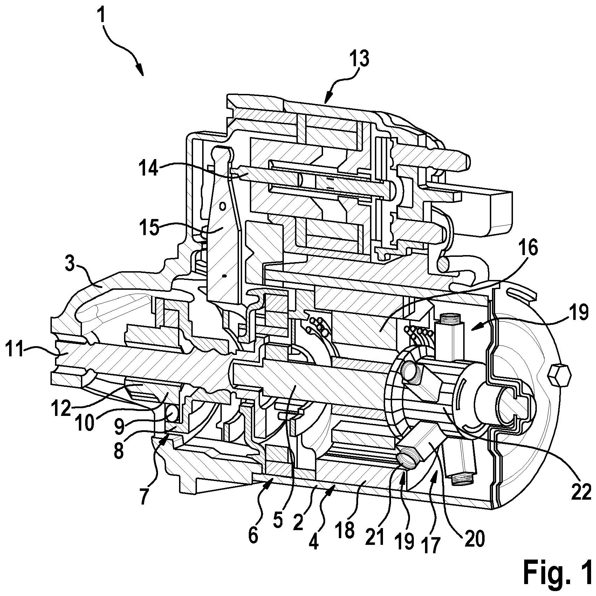

In Fig. 1 ist eine Startvorrichtung 1 für eine Brennkraftmaschine dargestellt, die in einem Gehäuse 2, welches einen vorne liegenden Lagerschild 3 aufweist, einen elektrischen Startermotor aufnimmt. Die Motorwelle 5 des Startermotors 4 treibt über ein Planetengetriebe 6 eine Antriebswelle 11 an, auf der ein Mitnehmer 8 einer Freilaufeinrichtung 7 axial verschieblich, jedoch in Drehrichtung mit der Antriebswelle 11 gekoppelt angeordnet ist. Der Mitnehmer 8 stützt sich über Stützrollen 9 an einem Rollenbund 10 ab, der einteilig mit einem Starterritzel 12 ausgebildet ist. Bei einer axialen Vorschubbewegung gelangt das Starterritzel 12 aus einer zurückgezogenen Außerbetriebsstellung in eine vorgerückte Eingriffsstellung mit dem Zahnkranz einer Brennkraftmaschine.

Die axiale Vorschubbewegung des Starterritzels 12 wird mithilfe eines elektromagnetischen Starterrelais 13 durchgeführt, das einen axial verstellbaren Hubanker 14 aufweist, welcher mit einem Gabelhebel gekoppelt ist. Bei einer axialen Stellbewegung des Hubankers 14 wird der am Gehäuse gelagerte Gabelhebel 15 verschwenkt, wodurch der Mitnehmer 8 einschließlich Starterritzel 12 in Achsrichtung verstellt wird.

Der elektrische Startermotor 4 ist als Innenläufermotor ausgebildet und weist einen drehfest mit der Motorwelle 5 verbundenen Anker 16 auf, welcher elektrisch erregbare Ankerspulen enthält. Die Spulen im Anker 16 werden über eine Kommutierungseinrichtung 17 bestromt. Das von den elektrischen Ankerspulen erzeugte elektromagnetische Feld interagiert mit dem Magnetfeld von Permanentmagneten 18, die an der Innenseite des den Anker umgreifenden Stators angeordnet sind.

Die Kommutierungseinrichtung 17 weist mehrere Feder-Bürste-Einheiten 19 auf, die jeweils gehäuseseitig eine Kohlebürste 20 und eine Bürstenfeder 21 umfassen, sowie einen ankerseitigen Kollektor 22. Die Kohlebürsten 20 werden von den Bürstenfedern 21 radial gegen die Mantelfläche des Kollektors 22 kraftbeaufschlagt. Kohlebürsten 20 und Bürstenfedern 21 sind zweckmäßigerweise in Bürstenhalterungen aufgenommen, die fest mit dem Gehäuse des Startermotors verbunden sind. Über den Umfang gleichmäßig verteilt sind insgesamt sechs Feder-Bürste-Einheiten 19 vorgesehen.

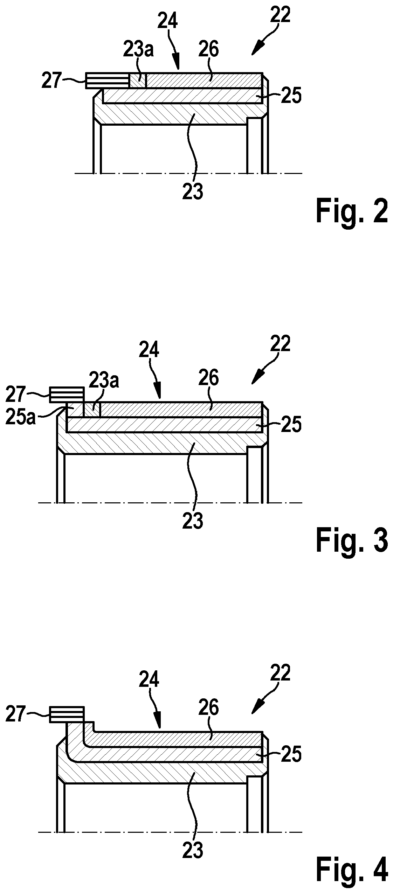

In Fig. 2 ist ein Längsschnitt durch einen Kollektor 22 dargestellt. Der Kollektor 22 weist einen Kollektorgrundkörper 23 auf, welcher aus einer elektrisch isolierenden Kunststoffpressmasse besteht, in den über den Umfang verteilt mehrere, sich in Achsrichtung erstreckende Lamellen 24 eingebracht sind, welche in Kontakt mit den Bürsten stehen. Die Lamellen 24 sind als Verbundlamellen ausgebildet und weisen einen Aluminiumabschnitt 25 und einen Kupferabschnitt 26 auf. Der Aluminiumabschnitt 25 liegt radial innen und bildet einen tragenden Kern der Lamelle, der Träger des radial außenliegenden Kupferabschnittes 26 ist. Der Aluminiumabschnitt 25 und der Kupferabschnitt 26 sind außerdem in elektrisch leitender Weise miteinander verbunden. Der Aluminiumabschnitt 25 ist des Weiteren mit einer Ankerwicklung 27 elektrisch verbunden. Somit erfolgt der Stromfluss über die Bürsten auf den Kupferabschnitt 26 der Lamelle 24 und weiter über den Aluminiumabschnitt 25 auf die Ankerwicklung 27.

Die Anschlussfahnen zur Ankerwicklung 27 bzw. die Enden der Ankerwicklung 27 liegen auf der Mantelfläche des Aluminiumabschnittes 25 auf, der axial länger ausgebildet ist als der Kupferabschnitt 26. Zwischen der Ankerwicklung 27 und der Stirnseite des axial verkürzt ausgeführten Kupferabschnittes 26 befindet sich ein Trennring 23a, der zweckmäßigerweise aus dem elektrisch isolierenden Material des Kollektorgrundkörpers 23 besteht. Der Trennring 23a stellt sicher, dass in die Trennstelle zwischen dem Aluminiumabschnitt 25 und dem Kupferabschnitt 26 keine Feuchtigkeit eindringen kann.

Im Bereich beider axialer Stirnseiten übergreift die Kunststoffpressmasse des Kollektorgrundkörpers 23 die Lamelle 24 in Radialrichtung. Benachbart zur Ankerwicklung 27 erstreckt sich die Pressmasse des Kollektorgrundkörpers 23 in Radialrichtung bis etwa zur äußeren Mantelfläche des Aluminiumabschnittes 25. Auf der gegenüberliegenden axialen Stirnseite erstreckt sich der Kollektorgrundkörper 23 in Radialrichtung bis über die Trennstelle zwischen den Abschnitten 25 und 26 hinaus, jedoch mit geringfügigem radialem Abstand zur äußeren Mantelfläche des Kupferabschnittes 26.

Der radiale Überstand, mit dem der Kollektorgrundkörper 23 radial über die Trennstelle zwischen dem Aluminiumabschnitt 25 und dem Messingabschnitt 26 übersteht, beträgt mindestens 1 % des Kollektor-Außendurchmessers, der durch die Außenseite des Kupferabschnittes 26 bestimmt ist. Zweckmäßigerweise ist der radiale Überstand über die Trennstelle hinaus maximal zwei Drittel der Radialdicke des Kupferabschnittes 26, so dass gewährleistet ist, dass zwar die Trennstelle von dem Kollektorgrundkörper übergriffen wird, jedoch zugleich ein ausreichender Abstand zur Außenseite des Kupferabschnittes 26 gegeben ist.

Im Ausführungsbeispiel gemäß Fig. 3 befindet sich im Bereich der Ankerwicklung 27 ein zusätzliches Kontaktelement 25a, welches vorzugsweise aus dem gleichen Material wie der Aluminiumabschnitt 25 gefertigt ist und das auf dem Aluminiumabschnitt 25 aufliegt. Das Kontaktelement 25a ist in Achsrichtung über den isolierenden Trennring 23a von dem Kupferabschnitt 26 separiert. Der Kontaktabschnitt 25a, der als Verbindung zwischen dem Aluminiumabschnitt und der Ankerwicklung 27 fungiert, erlaubt einen radial größeren Überstand des Kollektorgrundkörpers 23 an dieser Stirnseite.

Im Ausführungsbeispiel gemäß Fig. 4 sind sowohl der Aluminiumabschnitt 25 als auch der Kupferabschnitt 26 im Bereich einer axialen Stirnseite radial nach außen umgebogen. Der Aluminiumabschnitt 25 bildet in seinem radial umgebogenen Bereich eine Anschlussfahne zur Kontaktierung der Ankerwicklung 27.

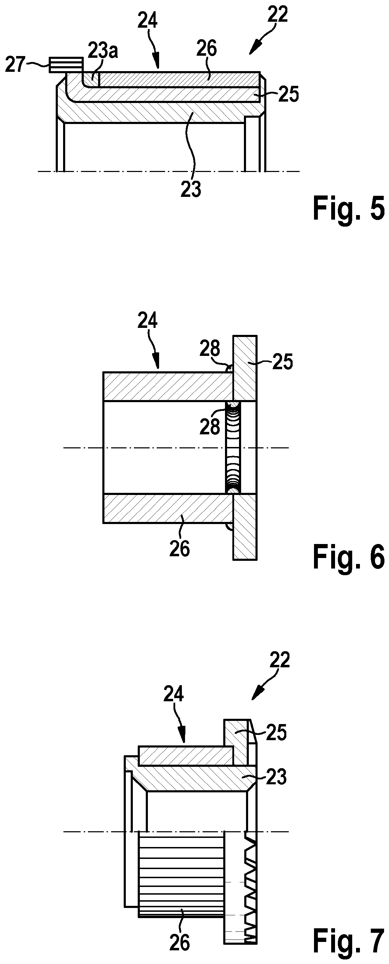

Im Ausführungsbeispiel gemäß Fig. 5 ist nur der Aluminiumabschnitt 25 im Bereich einer axialen Stirnseite umgebogen und bildet die Anschlussfahne zum Anschluss an die Ankerwicklung 27. Der Kupferabschnitt 26 ist dagegen nicht umgebogen, zwischen der Stirnseite des Kupferabschnittes 26 und dem radial umgebogenen Teil des Aluminiumabschnittes 25 befindet sich der Trennring 23a aus isolierendem Material.

In Fig. 6 ist ein Zwischenzustand bei der Herstellung der Lamellen 24 dargestellt. Der Kupferabschnitt 26 liegt als Rohr vor, an das stirnseitig mittels Reibschweißens ein scheibenförmiger Aluminiumabschnitt 25 angeschweißt wird. Die Schweißnähte 28 zwischen den Abschnitten können gegebenenfalls mechanisch entfernt werden. Nachdem die Verbindung zwischen dem Aluminiumabschnitt 25 und dem Kupferabschnitt 26 hergestellt worden ist, erfolgt durch Auftrennen die Vereinzelung zu den Lamellen.

In Fig. 7 ist ein Kollektor 22 mit Lamellen 24 dargestellt, die aus dem Ausgangszustand gemäß Fig. 6 hergestellt sind. Der Kupferabschnitt 26 liegt unmittelbar auf dem Kollektorgrundkörper 23 an und wird von diesem im Bereich einer axialen Stirnseite radial übergriffen. Die gegenüberliegende axiale Stirnseite des Kupferabschnittes 26 wird von dem Aluminiumabschnitt 25 übergriffen, der sich radial weiter nach außen erstreckt als der Kupferabschnitt 26. Die radiale Innenseite des Aluminiumabschnittes 25 steht ebenfalls in Kontakt mit dem Kollektorgrundkörper 23 und wird von diesem getragen.

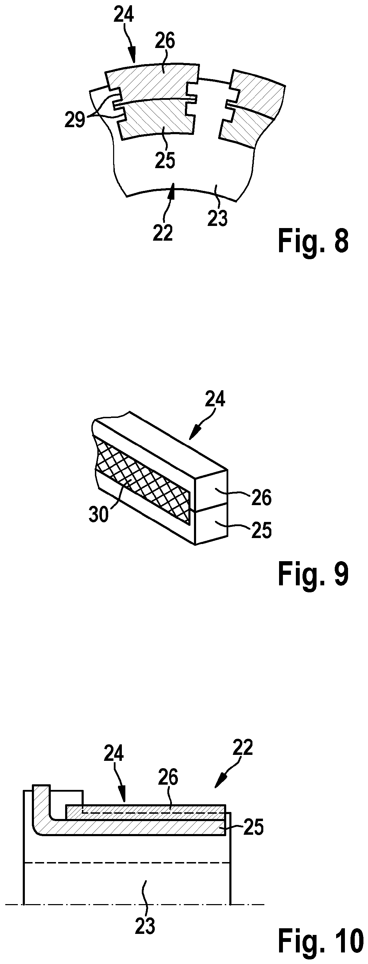

Im Ausführungsbeispiel gemäß Fig. 8 sind in die Seitenflächen sowohl des Aluminiumabschnittes 25 als auch des Kupferabschnittes 26 jeweils sich in Achsrichtung erstreckende Längsnuten 29 eingebracht, und zwar an beiden gegenüberliegenden Seitenflächen der Abschnitte 25, 26. Die Längsnuten erlauben eine verbesserte Verbindung mit der Pressmasse des Kollektorgrundkörpers 23. Die Abschnitte 25, 26 liegen radial so tief in der Pressmasse 23, dass die Trennstelle zwischen den Abschnitten vollständig von der Pressmasse übergriffen ist.

Im Ausführungsbeispiel gemäß Fig. 9 befindet sich an der Seitenfläche zumindest im Bereich der Trennstelle zwischen Aluminiumabschnitt 25 und Kupferabschnitt 26 eine in die Seitenfläche eingebrachte Oberflächenstrukturierung 30, welche ebenfalls die Haftung mit der Pressmasse 23 des Kollektorgrundkörpers verbessern soll.

Im Ausführungsbeispiel gemäß Fig. 10 ist die Lamelle 24 ähnlich wie in Fig. 5 ausgeführt. Allerdings erstreckt sich die Pressmasse des Kollektorgrundkörpers 23 im Bereich des radial aufgebogenen Teils des Aluminiumabschnittes 25 radial weiter nach außen, so dass der aufgebogene Teil des Aluminiumabschnittes mit Ausnahme der radial außenliegenden Stirnseite vollständig in der Pressmasse aufgenommen ist.

## Patentansprüche

1. Kommutierungseinrichtung zur Stromübertragung auf einen Anker (16) einer elektrischen Maschine mit einem ankerseitigen Kollektor (22), der in Umfangsrichtung eine Mehrzahl von Lamellen (24) aufweist, wobei die Lamellen (24) des Kollektors (22) jeweils einen Aluminium- oder Zinkabschnitt (25) und an der außenliegenden Seite der Lauffläche einen Kupfer- oder Messingabschnitt (26) aufweisen, mit der Bürsten der Kommutierungseinrichtung (17) in Kontakt stehen, wobei der Aluminium- bzw. Zinkabschnitt (25) mit dem Kupfer- bzw. Messingabschnitt (26) verbunden ist, und wobei der Aluminium- bzw. Zinkabschnitt (25) mit einer Ankerwicklung (27) elektrisch in Kontakt steht,
**dadurch gekennzeichnet, dass** der Aluminium- bzw. Zinkabschnitt (25) an der axialen Stirnseite des Kupfer- bzw. Messingabschnitts (26) angeordnet ist.

2. Kommutierungseinrichtung nach Anspruch 1, **dadurch gekennzeichnet, dass** der Aluminium- bzw. Zinkabschnitt (25) einen an der Lauffläche radial innenliegenden Aluminium- bzw. Zinkkern bildet, der an der radial außenliegenden Seite Träger des Kupfer- bzw. Messingabschnitts (26) ist.

3. Kommutierungseinrichtung nach einem der Ansprüche 1 bis 2, **dadurch gekennzeichnet, dass** der Aluminium- bzw. Zinkabschnitt (25) und der Kupfer- bzw. Messingabschnitt (26) formschlüssig miteinander verbunden sind.

4. Kommutierungseinrichtung nach einem der Ansprüche 1 bis 3, **dadurch gekennzeichnet, dass** der Aluminium- bzw. Zinkabschnitt (25) und der Kupfer- bzw. Messingabschnitt (26) stoffschlüssig miteinander verbunden sind.

5. Kommutierungseinrichtung nach einem der Ansprüche 1 bis 4, **dadurch gekennzeichnet, dass** der Kupfer- bzw. Messingabschnitt (26) als Kupfer- bzw. Messingschicht ausgebildet ist, die auf den Aluminium- bzw. Zinkabschnitt (25) aufgebracht ist.

6. Kommutierungseinrichtung nach einem der Ansprüche 1 bis 5, **dadurch gekennzeichnet, dass** zumindest ein Abschnitt der Lamelle (24) in einem elektrisch isolierenden Kollektorgrundkörper (23) des Kollektors (22) aufgenommen ist.

7. Kommutierungseinrichtung nach Anspruch 6, **dadurch gekennzeichnet, dass** der Kollektorgrundkörper (23) die Trennstelle zwischen dem Aluminium- bzw. Zinkabschnitt (25) und dem Kupfer- bzw. Messingabschnitt (26) radial übergreift.

8. Kommutierungseinrichtung nach Anspruch 7, **dadurch gekennzeichnet, dass** der radiale Überstand mindestens 1 % des Kollektordurchmessers (d_{K}) beträgt.

9. Kommutierungseinrichtung nach Anspruch 7 oder 8, **dadurch gekennzeichnet, dass** der radiale Überstand maximal zwei Drittel der Radialdicke des Kupfer- bzw. Messingabschnitts (26) beträgt.

10. Kommutierungseinrichtung nach einem der Ansprüche 6 bis 9, **dadurch gekennzeichnet, dass** der Kollektorgrundkörper (23) als eine Kunststoffpressmasse ausgebildet ist.

11. Kommutierungseinrichtung nach einem der Ansprüche 1 bis 10, **dadurch gekennzeichnet, dass** mindestens eine Seitenfläche mindestens einer Lamelle (24) eine strukturierte bzw. nicht-geradflächige Oberfläche aufweist.

12. Kommutierungseinrichtung nach einem der Ansprüche 1 bis 11 zur Stromübertragung auf einen Anker (16) einer als Startermotor (4) für eine Brennkraftmaschine ausgebildeten elektrischen Maschine.

13. Elektrische Maschine, insbesondere Startermotor (4) für einen Starter für eine Brennkraftmaschine, mit einer Kommutierungseinrichtung (17) nach einem der Ansprüche 1 bis 12.

14. Elektrische Maschine nach Anspruch 13, die als Startermotor (4) für einen Starter für eine Brennkraftmaschine ausgebildet ist.

15. Starter für eine Brennkraftmaschine mit einem elektrischen Startermotor (4) nach Anspruch 14.

## Claims

1. Commutation device for current transmission to an armature (16) of an electric machine, comprising an armature-side collector (22), which has a plurality of lamellas (24) in circumferential direction, wherein the lamellas (24) of the collector (22) each comprise an aluminum or a zinc section (25) and, on the outer side of the running surface, a copper or a brass section (26), with which brushes of the commutation device (17) are in contact, wherein the aluminum or zinc section (25) is connected to the copper or brass section (26), and wherein the aluminum or zinc section (25) is in electric contact with an armature winding (27),
**characterized in that** the aluminum or zinc section (25) is disposed at the axial end face of the copper or brass section (26).

2. Commutation device according to claim 1, **characterized in that** the aluminum or zinc section (25) forms an aluminum or zinc core located radially inside the running surface, which is a carrier of the copper or brass section (26) on the side located radially outwardly.

3. Commutation device according to any one of claims 1 to 2, **characterized in that** the aluminum or zinc section (25) and the copper or brass section (26) are interconnected in a form-fit manner.

4. Commutation device according to any one of claims 1 to 3, **characterized in that** the aluminum or zinc section (25) and the copper or brass section (26) are interconnected in a cohesive manner.

5. Commutation device according to any one of claims 1 to 4, **characterized in that** the copper or brass section (26) is formed as a copper or brass layer which is applied to the aluminum or zinc section (25).

6. Commutation device according to any one of claims 1 to 5, **characterized in that** at least a section of the lamella (24) is accommodated in an electrically insulating collector base body (23) of the collector (22).

7. Commutation device according to claim 6, **characterized in that** the collector base body (23) radially overlaps the separation point between the aluminum or zinc section (25) and the copper or brass section (26).

8. Commutation device according to claim 7, **characterized in that** the radial protrusion is at least 1% of the collector diameter (d_{K}).

9. Commutation device according to claim 7 or 8, **characterized in that** the radial protrusion is a maximum of two-third of the radial thickness of the copper or brass section (26).

10. Commutation device according to any one of claims 6 to 9, **characterized in that** the collector base body (23) is formed as a plastics molding material.

11. Commutation device according to any one of claims 1 to 10, **characterized in that** at least one side surface of at least one lamella (24) has a structured or non-flat surface.

12. Commutation device according to any one of claims 1 to 11 for current transmission to an armature (16) of an electric machine provided as a starter motor (4) for an internal combustion engine.

13. Electric machine, in particular starter motor (4) for a starter for an internal combustion engine, comprising a commutation device (17) according to any one of claims 1 to 12.

14. Electric machine according to claim 13, which is provided as a starter motor (4) for a starter for an internal combustion engine.

15. Starter for an internal combustion engine comprising an electric starter motor (4) according to claim 14.

## Revendications

1. Dispositif de commutation pour la transmission de courant à une armature (16) d'une machine électrique ayant un collecteur côté armature (22) qui comporte une pluralité de lamelles (24) dans une direction circonférentielle, dans lequel les lamelles (24) du collecteur (22) comportent respectivement une partie en aluminium ou en zinc et une partie en cuivre ou en laiton (26) sur le côté extérieur de la surface de course, qui sont en contact avec les balais du dispositif de commutation (17), dans lequel la partie en aluminium ou en zinc (25) est reliée à la partie en cuivre ou en laiton (26), et dans lequel la partie en aluminium ou en zinc (25) est électriquement en contact avec un enroulement d'induit (27),
**caractérisé en ce que** la partie en aluminium ou en zinc (25) est agencée sur la face frontale axiale de la partie en cuivre ou en laiton (26).

2. Dispositif de commutation selon la revendication 1, **caractérisé en ce que** la partie en aluminium ou en zinc (25) forme un noyau en aluminium ou en zinc (25) radialement à l'intérieur de la surface de course, lequel noyau sert de support à la partie en cuivre ou en laiton (26) sur le côté radialement à l'extérieur.

3. Dispositif de commutation selon l'une des revendications 1 à 2, **caractérisé en ce que** la partie en aluminium ou en zinc (25) et la partie en cuivre ou en laiton (26) sont reliées l'une à l'autre par complémentarité de formes.

4. Dispositif de commutation selon l'une des revendications 1 à 3, **caractérisé en ce que** la partie en aluminium ou en zinc (25) et la partie en cuivre ou en laiton (26) sont reliés l'une à l'autre par liaison de matière.

5. Dispositif de commutation selon l'une des revendications 1 à 4, **caractérisé en ce que** la partie en cuivre ou en laiton (26) est réalisée sous la forme d'une couche de cuivre ou de laiton qui est appliquée sur la partie en aluminium ou en zinc (25).

6. Dispositif de commutation selon l'une des revendications 1 à 5, **caractérisé en ce qu'**au moins une partie de la lamelle (24) est reçue dans un corps principal de collecteur électriquement isolant (23) du collecteur (22).

7. Dispositif de commutation selon la revendication 6, **caractérisé en ce que** le corps principal de collecteur (23) recouvre radialement l'emplacement de séparation entre la partie en aluminium ou en zinc (25) et la partie en cuivre ou en laiton (26).

8. Dispositif de commutation selon la revendication 7, **caractérisé en ce que** la distance radiale représente au moins 1 % du diamètre de collecteur (d_{K}).

9. Dispositif de commutation selon la revendication 7 ou 8, **caractérisé en ce que** la distance radiale est au maximum égale à deux tiers de l'épaisseur radiale de la partie en cuivre ou en laiton (26).

10. Dispositif de commutation selon l'une des revendications 6 à 9, **caractérisé en ce que** le corps principal de collecteur (23) est réalisé sous la forme d'une pièce moulée en matière plastique.

11. Dispositif de commutation selon l'une des revendications 1 à 10, **caractérisé en ce qu'**au moins une face latérale d'au moins une lamelle (24) comporte une surface structurée ou non rectiligne.

12. Dispositif de commutation selon l'une des revendications 1 à 11 pour la transmission de courant à une armature (16) d'une machine électrique réalisée sous la forme d'un moteur de démarreur (4) d'un moteur à combustion interne.

13. Machine électrique, en particulier un moteur de démarreur (4) pour un démarreur d'un moteur à combustion interne, comportant un dispositif de commutation (17) selon l'une des revendications 1 à 12.

14. Machine électrique selon la revendication 13, réalisée sous la forme d'un moteur de démarreur (4) pour un démarreur d'un moteur à combustion interne.

15. Démarreur pour un moteur à combustion interne ayant un moteur de démarreur électrique (4) selon la revendication 14.
